# EUROPEAN PATENT SPECIFICATION

(11) **EP 3 441 260 B1**
(45) Date of publication and mention of the grant of the patent: **04.03.2020**
(21) Application number: 17382557.1
(22) Date of filing: 07.08.2017
(51) Int. Cl.: B60P 3/00, B60P 3/22

(54) **LOADING AND UNLOADING SYSTEM FOR HAZARDOUS GOODS TANKERS**
BELADE- UND ENTLADESYSTEM FÜR TANKFAHRZEUGE MIT GEFÄHRLICHEN GÜTERN
SYSTÈME DE CHARGEMENT ET DÉCHARGEMENT POUR VÉHICULES CITERNES AVEC DES MARCHANDISES DANGEREUSES

(43) Date of publication of application: 13.02.2019
(73) Proprietor: Talleres Cobo Hnos, S.L., 39611 Guarnizo (Cantabria) (ES)
(72) Inventor: GOMIS GALAN, FERNANDO, 39611 GUARNIZO (ES)
(74) Representative: Ezcurra Zufia, Maria Antonia

(56) References cited:
- US-A- 3 142 410
- US-A1- 2014 090 300
- US-B1- 6 318 402

## Description

### OBJECT OF THE INVENTION

The object of the present invention, as established in the title of the invention, is a system for loading and unloading tanker trucks carrying dangerous goods that does not require access to the top of the tankers. This system is of particular value in top-loading operations, that is to say, when loading is performed through the top of the tanker, as the system enables the operation to be performed without requiring personnel to access the top of the tanker; likewise access to the top is not required either in the unloading operation.

The present invention is characterised by the special configuration and functionality of the elements used which enable a loading and unloading system offering a high degree of safety and protection for operators during loading and unloading work by eliminating the need for personnel to access the top of the vehicles.

This invention therefore falls within the area of tanker trucks on the one hand, and of opening and closing methods for supplying liquid on the other.

### BACKGROUND TO THE INVENTION

Traditionally the system for loading tanker trucks carrying bulk dangerous goods is performed through the top of the vehicle by way of what are called manholes, also known as loading hatches.

To perform loading and unloading, the tanker accesses the loading facilities in factories or loading tanks and is positioned under what is known as the loading arm. The operator must then access the top of the tanker to open the manhole in order to allow the loading arm to be inserted and the tanker filled. This manhole is also used to gain access to the interior of the tanker for repair and maintenance work.

This loading and unloading system requires a system for accessing the top of the tanker, located at a height of over 3 metres, with the corresponding protection systems for work at height, and the subsequent risk assessment in order to draw up working procedures and safety equipment for the working platforms of the tankers, said equipment generally comprising an access ladder, work platforms and protective railings.

The manhole must be opened and later closed manually, sometimes in high temperature conditions (due to the product transported) with fumes being emitted from the goods being loaded. This procedure entails the possibility of human error if the right tightening torque is not applied to close the manhole securely, with a subsequent possibility of accident as a result of leakage of the product and escape of fumes.

Several accidents have been reported with subsequent loss of human life due to the possibility of human error. In one case, for example, the bolts of the manhole on a tanker loaded with asphalt were not properly closed, resulting in a leakage which caused the death of the driver.

The current procedure for unloading top-loading tankers also requires that personnel from the unloading facilities or the drivers themselves access the top of the tanker to open the manhole before unloading and to close the manhole after unloading, with the same safety problems for work at height as mentioned above, frequently in the open air and in unfavourable conditions.
[0009(i)] in the state of the art are known the following documents:
- US6318402, which discloses a pneumatic tank truck closure apparatus.
- US2014090300, which discloses a door actuator assembly comprising a base plate, mounted to a container. The container includes a distribution orifice and a trap door mounted to the container that moves selectively between a closed position covering the distribution orifice, and an open position not fully covering the distribution orifice

The object of the present invention is therefore to avoid the possible accidents and risks involved in loading and unloading of goods tankers as performed heretofore, by developing a loading and unloading system such as that described below, whose essential details are set out in Claim 1.

### DESCRIPTION OF THE INVENTION

The object of the present invention is a system for loading tankers carrying dangerous goods to replace the manhole or loading hatch with a remotely controlled guillotine, knife-gate or slide-gate valve, adapted to the manhole of the tanker.

The diameter of said valve is adapted to the dimensions of the hoses of the loading pipes, which can range from 100 to 700 mm in diameter.

The valve has remote actuator systems which may be pneumatic, hydraulic, electrical, by radiofrequency or mechanical, such that they cause the valve to open or close, by moving the knife-gate, guillotine or slide-gate in the valve.

The valve is fully opening, thus allowing the loading pipe or hose to be inserted without impediment, and allowing the filling operation to be carried out with no modification to current systems at loading facilities. The loading system of the tanker is thus entirely autonomous and independent of the loading system and is therefore valid for all present systems.

Once loading of the tanker has concluded, the valve is remotely closed, without requiring access to the top of the tanker, with the subsequent advantage in terms of safety, as well as ensuring that the valve is tightly closed, since it has been closed automatically using devices that are not manually operated directly on the valve.

When it is necessary to unload or empty the tanker, once the unloading hose has been connected, the valve is remotely opened, with the subsequent advantage in terms of safety derived from the fact that it is not necessary to work at height or in immediate proximity to the goods, as well as ensuring correct opening by performing the operation automatically, without requiring physical intervention by personnel.

In the case of unloading of the goods using high-pressure air, the valve may remain closed, working at the design pressure, without loss of sealing or pressure, and the operator is never required to be in close proximity to the goods.

Unless otherwise specified, all technical and scientific elements used in this specification have the meaning habitually understood by a person skilled in the art to which this invention pertains.

Throughout the description and the claims, the word "contains", "comprises" and any variations thereon shall not be intended to exclude other technical characteristics, additives, components or steps. For experts in the field, other objects, advantages and characteristics of the invention will emerge partly from the description and partly from practice with the invention.

### DESCRIPTION OF FIGURES

To complete the description made herein and in order better to aid understanding of the characteristics of the invention, according to a preferential example of a practical embodiment thereof, this description is accompanied by a set of drawings showing as follows in indicative, but not limitative terms.
Figure 1 shows a detailed perspective aerial view of the tanker loading system that forms the object of the invention.

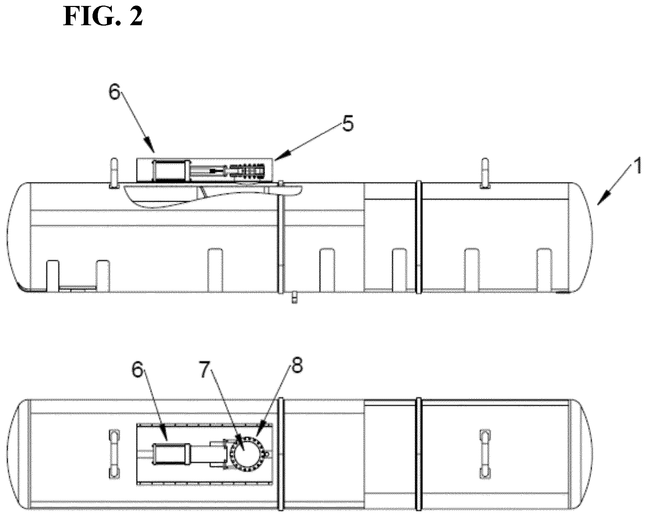

Figure 2 shows a side view of the system represented above.

### PREFERRED EMBODIMENT OF THE INVENTION.

According to the figures one preferred embodiment of the proposed invention is described below.

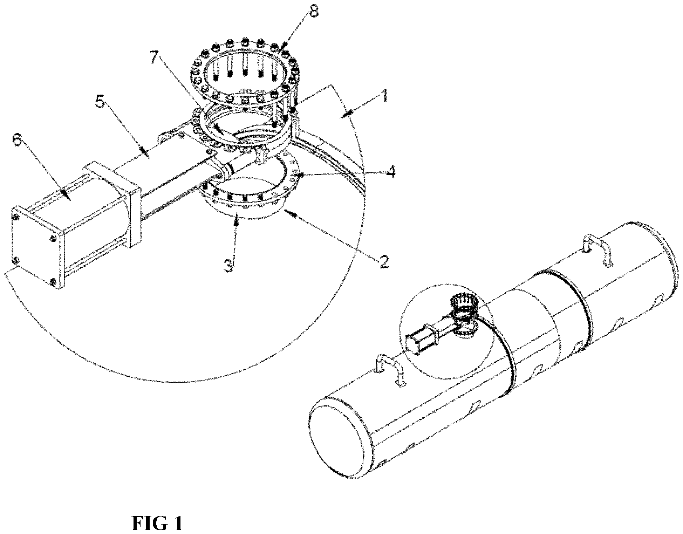

Figure 1 shows a tank or tanker (1) fitted with a manhole (2) containing a filler neck (3) protruding perpendicularly to the surface of the tank, with a cover flange (4) to close the tank (1) on the free edge of the neck (3).

In addition, over the manhole of the tank is fitted a shut-off valve (5), preferably fully-closing, containing a remotely-controlled actuator (6), as well as closing devices, which in the embodiment shown here are a knife-gate, guillotine or slide-gate (7).

The shut-off valve (5) is secured on the manhole (2) of the tanker (1) by means of a fixing flange (8) which ensures that the valve is secured on the cover flange (4) of the tanker (1).

The actuator (2) may be an electrical, mechanical, hydraulic, pneumatic or any other possible type of valve actuator, while the remote-controlled actuator devices will be any of those already known, such as manual, electric, hydraulic, pneumatic or by means of radiofrequency.

The characteristics described above achieve above all the safety of the operators, since they do not have to perform loading and unloading work at height or in the proximity of the goods, and also of the goods themselves by ensuring secure opening and closing since this is performed with automatic devices and not by way of manual manoeuvres which are always prone to possible error.

Having sufficiently described the nature of the present invention, and the means of implementing it, it is noted that within the same essence, it may be made in other embodiments differing in detail from that indicated herein as an example.

## Claims

1. Loading and unloading system for tanker trucks carrying dangerous goods comprising a tanker (1) fitted with a manhole (2) containing a neck (3) which protrudes perpendicularly to the surface of the tank with a cover flange (4) on the free edge of the neck (3) to close the tanker (1) whereby secured on the manhole (2) of the tank there is a shut-off valve (5) containing an actuator (6) remotely controlled by means of actuator devices, where the shut-off valve (5) has a knife-gate, guillotine or slide-gate (7), **characterised by** the fact that the shut-off valve (5) is secured on the manhole (2) of the tanker (1) by means of a fixing flange (8) which ensures proper securing of the valve on the cover flange (4) of the tanker (1).

2. Loading and unloading system for tanker trucks carrying dangerous goods according to Claim 1**characterised by** the fact that the actuator (6) is an electrical, mechanical, hydraulic or pneumatic actuator, while the remote-control device is manual, electrical, hydraulic, pneumatic or by means of radiofrequency.

## Patentansprüche

1. Be- und Entladesystem für gefährliche Güter befördernde Tankfahrzeuge, umfassend einen Tank (1), der mit einem Mannloch (2) versehen ist, das einen Stutzen (3) aufweist, der senkrecht zur Oberfläche des Tanks mit einem Abdeckflansch (4) am freien Rand des Stutzens (3) vorsteht, um den Tank (1) zu verschließen, wobei auf dem Mannloch (2) des Tankes ein Absperrventil (5) befestigt ist, das ein mittels Betätigungsvorrichtungen ferngesteuertes Stellglied (6) aufweist, wobei das Absperrventil (5) einen Plattenschieber, eine Guillotine oder einen Gleitschieber (7) enthält, **dadurch gekennzeichnet, dass** das Absperrventil (5) am Mannloch (2) des Tankes (1) mittels eines Befestigungsflansches (8) befestigt ist, der die ordnungsgemäße Sicherung des Ventils am Abdeckflansch (4) des Tankes (1) gewährleistet.

2. Be- und Entladesystem für gefährliche Güter befördernde Tankfahrzeuge gemäß Anspruch 1, durch den Umstand gekennzeichnet, dass das Stellglied (6) ein elektrisches, mechanisches, hydraulisches oder pneumatisches Stellglied ist, während die Fernsteuerungsvorrichtung manuell, elektrisch, hydraulisch, pneumatisch oder mittels Funkfrequenz agiert.

## Revendications

1. Système de chargement et de déchargement pour camions-citernes transportant des marchandises dangereuses comprenant une citerne (1) munie d'un trou d'homme (2) contenant un goulot (3) qui dépasse perpendiculairement à la surface du réservoir avec une bride de couverture (4) sur le bord libre du goulot (3) pour fermer le camion-citerne (1), où une vanne d'arrêt (5) est fixée sur le trou d'homme (2) du réservoir et contenant un actionneur (6) commandé à distance au moyen de dispositifs d'actionnement, où la vanne d'arrêt (5) comporte une vanne à guillotine, une guillotine ou une vanne coulissante (7), **caractérisé par le fait que** la vanne d'arrêt (5) est fixée sur le trou d'homme (2) du camion-citerne (1) au moyen d'une bride de fixation (8) qui assure une fixation correcte de la vanne sur la bride de couverture (4) du camion-citerne (1).

2. Système de chargement et de déchargement pour camions-citernes transportant des marchandises dangereuses selon la revendication 1 **caractérisé par le fait que** l'actionneur (6) est un actionneur électrique, hydraulique ou pneumatique, tandis que le dispositif de télécommande est manuel, électrique, hydraulique, pneumatique ou par radiofréquence.
